# EUROPEAN PATENT SPECIFICATION

(11) **EP 0 880 837 B1**
(45) Date of publication and mention of the grant of the patent: **25.08.2004**
(21) Application number: 97904692.7
(22) Date of filing: 23.01.1997
(51) Int. Cl.: H04L 5/06

(54) **Adjustment of the guard space duration in an OFDM system**
Anpassung des Schutzintervalls in einem OFDM system
Ajustement de l'intervalle de guarde dans un système MDFO

(30) Priority: 14.02.1996 SE 9600537
(43) Date of publication of application: 02.12.1998
(73) Proprietor: TELIA AB, 123 86 Farsta (SE)
(72) Inventor: LARSSON, Roger, S-951 48 Lulea (SE)
(74) Representative: Akerman, Marten Lennart
(86) International application number: PCT/SE1997/000109
(87) International publication number: WO 1997/030531

(56) References cited:
- WO-A-94/06231
- DE-C- 4 425 713
- IEEE TRANSACTIONS ON BROADCASTING, Volume 41, No. 1, March 1995, WILLIAM Y. ZOU et al., "COFDM: An Overview", Chapter 3.3.

## Description

The present invention relates to OFDM (orthogonal frequency division multiplex) telecommunications systems, and methods of operating such systems, more particularly to the use of variable guard spaces in such systems.

In an OFDM system data is modulated onto a broadband signal comprising a large number of individual frequency carriers which form a frequency division multiplex. The bandwidths of the individual frequency channels, are small and arranged so that the maximum of the sinc(x), (sinc(x) = sin(x)/x), power spectrum, of one channel, corresponds with the first minimum in the sinc(x) power spectrum of the adjacent channels. In other words, the channel separation equals 1/(symbol length), for rectangular symbols. It is for this reason that adjacent channels are described as "orthogonal". OFDM systems normally use a FFT (fast fourier transform) process to demodulate the data signal from the transmitted signal. Convolution error coding and FFT may be employed at the modulator (transmitter) stage. In the receiver, complementary FFT processing is combined with Viterbi decoding, at the demodulator stage. This ensures that the overall bit error rate is very low. This particular variant of OFDM is known as COFDM (Coded Orthogonal Frequency Division Multiplex). In recent years, COFDM systems have been developed for a variety of broadcasting applications, e.g. for digital audio broadcasting and high definition TV. For convenience, in this specification the term OFDM is used to refer to both OFDM and COFDM.

The next generation of mobile communications systems may, with advantage, employ OFDM. However, in mobile communications systems the distance between a receiver and transmitter is not constant and, in addition, the terrain between receiver and transmitter may vary. This results in signal dispersion in the frequency domain, or delay spread in the time domain, in a communications channel employing OFDM.

To ensure that the performance of an OFDM system is adequate, it is necessary to provide a guard space between symbols so that the effects of mutual interference between adjacent symbols is avoided. In a conventional OFDM system, the length of this guard space must be equal to, or greater than, the maximum delay spread in the system. Bearing in mind that under some conditions the delay spread in a mobile system may be large, while under other conditions the delay spread may be low, the use of a fixed guard space corresponding to the longest delay spread, imposes an overhead on the transmission capacity of a communications channel. Any compromise in the selection of the length of guard space will, in some circumstances, cause a loss of transmitted data.

It is an object of the present invention to minimise the overhead imposed on channel traffic capacity in an OFDM system by the use of a guard space between symbols, without degrading system performance.

The use of guard spaces in mobile telecommunications systems is well known. European Patent Application EP 0,295,227 describes a digital TDMA (time division multiple access) mobile telephone system in which time slot assignment is made in dependence on the propagation time between different mobile stations and a base station. Each time frame includes a guard space used to avoid overlap between transmissions to, or from, different mobile stations.

US Patent 5,371,548 discloses the use of guard spaces with OFDM systems.

European Patent Application EP .0,589,709 A2 discloses an OFDM system employing quadrature amplitude modulation, or modified phase shift keying, in which long guard times and/or wider channel spacings are employed.

US Patent 4,937,819 discloses a TDMA system in which ranging, with respect'to time, is employed to reduce guard times between successive transmissions.

DE-C-4425713 discloses a method of operating an OFDM system comprising a receiver and a transmitter, by transmitting data as a series of OFDM symbol bursts, each symbol burst, in the time domain, having a portion thereof repeated therein as a guard space, said receiver having a time window with which, after demultiplexing, said symbol burst must be aligned, wherein said repeated portion of a symbol burst having a variable guard space duration, and, during system operation, adjusting said variable guard space duration.

The present invention solves the problem of data loss caused by delay spread, whereby the channel capacity is maximised without signal degradation in the receiver.

According to a first aspect of the present invention, there is provided an OFDM system comprising a receiver and a transmitter, said transmitter being adapted to transmit data in OFDM symbol bursts in which, in the time domain, a portion of a symbol burst is repeated within said symbol burst as a guard space, said receiver having a time window with which, after demultiplexing, said symbol burst must be aligned, wherein said repeated portion of a symbol burst has a guard space duration (Tg) which is variable and which is adjusted, during system operation, characterised in that said receiver is adapted to continuously transmit a control signal, indicative of a level of delay spread in a received signal, to said transmitter and said transmitter is adapted to adjust said guard space duration (Tg) in dependence of said control signal to overcome data loss caused by delay spread.

Preferably said receiver is adapted to vary said time window to produce, on demultiplexing, a guard space of a minimum duration necessary to prevent data loss caused by delay spread.

The portion of said symbol burst which is repeated may be copied from a leading edge of said symbol burst.

Said repeated portion of said symbol burst may be repeated at a trailing, edge of said symbol burst.

Said receiver may be adapted to transmit a signal to said transmitter indicative of a level of delay spread in a received signal, and said transmitter is adapted to adjust said guard space duration to a minimum value necessary to prevent data loss caused by delay spread.

Preferably said receiver is adapted to detect a transmitted signal when said time window is incorrectly adjusted.

Said OFDM system may be adapted to operate as a mobile telecommunications system.

According to a second aspect of the present invention there is provided a receiver, for use with an OFDM system including a transmitter adapted to transmit data in OFDM symbol bursts, in which, in the time domain, a portion of a symbol burst is repeated within said symbol burst as a guard space, said receiver having a time window with which, after demultiplexing, said symbol burst must be aligned, wherein said repeated portion of a symbol burst has a guard space duration (Tg) which is variable and which is adjusted, during operation, characterised in that said receiver is adapted to continuously transmit a control signal, indicative of a level of delay spread in a received signal, to said transmitter and said transmitter is adapted to adjust said guard space duration (Tg) in dependence of said control signal to overcome data loss caused by delay spread.

Preferably said receiver includes performance measuring means for measuring received signal quality and reception window adjusting means for adjusting said time window duration in response to a signal from said performance measuring means.

Preferably said receiver is adapted to transmit a signal to said transmitter indicative of a level of delay spread in a received signal, and said transmitter is adapted to adjust said guard space duration to a minimum value necessary to prevent data loss caused by delay spread.

Said receiver may be adapted to detect a transmitted signal when said time window is incorrectly adjusted.

According to a third aspect of the present invention there is provided a method of operating an OFDM system comprising a receiver and a transmitter, by transmitting data as a series of OFDM symbol bursts, each symbol burst, in the time domain, having a portion thereof repeated therein as a guard space, said receiver having a time window with which, after demultiplexing, said symbol burst must be aligned, wherein said repeated portion of a symbol burst having a variable guard space duration (Tg), and, during system operation, adjusting said variable guard space duration (Tg), characterised in that said receiver continuously transmits a control signal, indicative of a level of delay spread in a received signal, to said transmitter and said transmitter adjusts said guard space duration (Tg) in dependence of said control signal to overcome data loss caused by delay spread.

Preferably said receiver time window is adjusted to produce, on demultiplexing, a guard space of a minimum duration necessary to prevent data loss caused by delay spread.

The repeated portion of said symbol burst may be copied from a leading edge thereof.

The repeated portion of said symbol burst may be repeated at a trailing edge of said symbol burst.

Said receiver may measure received signal quality and may adjust said time window duration so that said received signal quality exceeds a predetermined threshold.

Embodiments of the invention will now be described, by way of example, with reference to the accompanying drawings, in which:
Figure 1 shows a typical impulse response for hilly rural terrain.
Figure 2 shows a typical impulse response for urban terrain.
Figure 3 shows a typical impulse response for the interior of a building.
Figure 4 shows a typical impulse response for a micro cell in a cellular digital mobile telephone system.
Figure 5 is a diagrammatic illustration of an OFDM transmission burst.

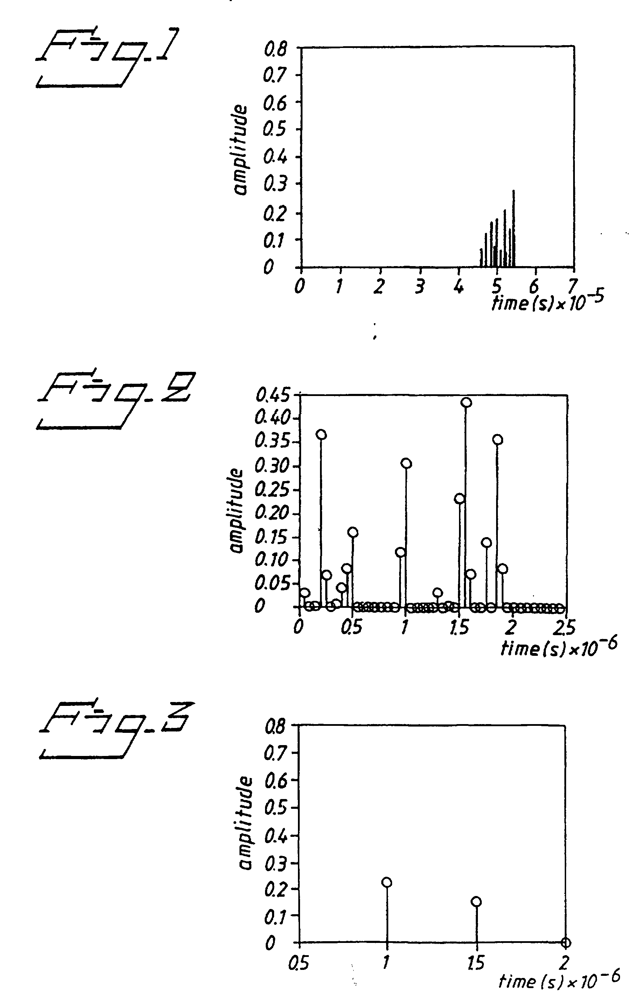

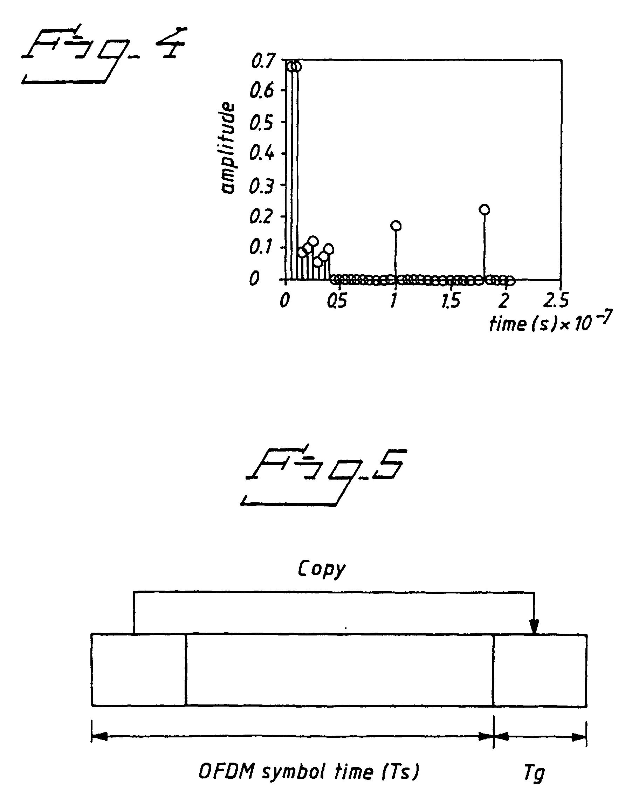

Referring to Figure 1 to 4, there is shown the effect of terrain on delay spread, in an OFDM system. As can be seen from the drawings delay spread can vary from 0.2µs to 50µs. If a guard space is to be used which will avoid inter-symbol interference, caused by delay spread, in all of the different environments for which impulse responses are illustrated in Figures 1 to 4, it will need to be equal, or greater than, 50µs. In the case where delay spread is equal to 0.2µs this imposes an unnecessary loss of channel capacity. It should be noted that the delay spread in the time domain transforms to frequency dispersion in the frequency domain. Whether the effect is viewed as a frequency dispersion, or a time dispersion, the effect is the same, i.e. loss of channel capacity.

The use of a guard space in an OFDM system, to overcome the effect of delay spread, is illustrated in Figure 5. The guard space takes the form of a cyclic repetition of the first part of an OFDM burst, i.e. the beginning of the OFDM burst is copied and repeated at the end of the burst. The OFDM symbol duration is denoted by Tₛ and the duration of the guard space is denoted by T_{g}. An OFDM receiver has a time window in which it can receive an OFDM symbol. The minimum duration of this time window is equal to Tₛ. The receiver can, therefore, only see that part of the signal which is not destroyed by delay spread in the communications channel. A receiver must, therefore, have a time window which corresponds to Tₛ + T_{g}. The loss of performance imposed by the use of a guard space T_{g} is Δ, where: Δ = 10log(T_{g}/Tₛ)dB. By using a variable guard space, as opposed to a fixed guard space having a duration corresponding to the maximum needed to overcome the effects of delay spread, the loss of system performance is reduced to the minimum extent necessary to avoid loss of data. In order to take account of known delay spread in different environments, T_{g} must be capable of being varied from 0.2µs to 50µs.

The concept of the present invention, namely the use of a variable guard space can be implemented in an OFDM system as explained below. The guard space is inserted into the transmitted data stream after modulation and before multiplexing by the transmitter. In the multiplexed OFDM signal, the guard space is transformed into an increase in the carrier spacing present in the OFDM burst, in the frequency domain. At the receiver, the guard space is regenerated when the OFDM burst is demultiplexed by FFT (fast fourier transform) processing. The receiver can detect the OFDM burst even if its time window is incorrectly set, and can adjust its time window to the correct value for proper reception of subsequent OFDM bursts.

When the system is adapted for the two way transmission of data, i.e. when the receiver has a transmission capability, the receiver may measure the delay spread present in a received signal and transmit a control signal to the transmitter which causes the transmitter to adjust the duration of T_{g} to the minimum value needed to overcome loss of data through delay spread. In this way, the system uses the minimum guard space necessary to overcome the effects of delay spread, thereby maximising the channel traffic capacity without signal degradation in the receiver.

A transmitter for use in the present invention must be able to insert a guard space in the transmitted data bursts and be able to adjust the duration of the guard space, so that it is just sufficient to eliminate signal degradation by delay spread. In addition, the transmitter may be adapted to receive a control signal, from a receiver, indicative of the amount of delay spread present in a received signal, and to use this signal to adjust the duration of the guard space, on a continuous basis. This ability to continuously vary the duration of the guard space, during system operation, is particularly valuable where the system is used in mobile telephony.

A receiver for use in the present invention must be able to adjust the reception window for OFDM bursts to match the size of the transmitted burst, as received. In particular, the FFT frame must be synchronised with the received OFDM burst, if the received signal is to be demultiplexed correctly. However, a receiver can still detect a received burst, even if its reception window is incorrectly set, and can adjust the reception window to match the correct value for the received signal. In addition, the receiver may measure the amount of delay spread present in the received signal and transmit a control signal, to the transmitter, causing the transmitter to adjust the duration of the guard space employed.

The present invention has particular application in mobile telephony, in which a plurality of base stations transmit data to a plurality of mobile stations. In such systems, delay spread may vary during the course of transmission, between a given base station and a given mobile, as the mobile's position continuously changes. Furthermore, in such systems, traffic capacity is at a premium. The ability to continuously measure the delay spread present and adjust guard spaces, in OFDM bursts, to ensure undegraded transmission with a minimum guard space duration, conserves traffic capacity in a transmission channel.

The design and implementation of OFDM systems are well known to those skilled in the art of telecommunications, and the manner in which an OFDM system, implementing the present invention, can be realised will be readily apparent to those skilled in the art, from the foregoing description.

## Claims

1. An OFDM system comprising a receiver and a transmitter, said transmitter being adapted to transmit data in OFDM symbol bursts in which, in the time domain, a portion of a symbol burst is repeated within said symbol burst as a guard space, said receiver having a time window with which, after demultiplexing, said symbol burst must be aligned, wherein said repeated portion of a symbol burst has a guard space duration (Tg) which is variable and which is adjusted, during system operation, **characterised in that** said receiver is adapted to continuously transmit a control signal, indicative of a level of delay spread in a received signal, to said transmitter and said transmitter is adapted to adjust said guard space duration (Tg) in dependence of said control signal to overcome data loss caused by delay spread.

2. An OFDM system as claimed in claim 1, **characterised in that** said receiver is adapted to vary said time window to produce, on demultiplexing, a guard space duration (Tg) overcoming data loss caused by delay spread.

3. An OFDM system as claimed in either claim 1, or claim 2, **characterised in that** the portion of said symbol burst which is repeated is copied from a leading edge of said symbol burst.

4. An OFDM system as claimed in any previous claim, **characterised in that** said repeated portion of said symbol burst is repeated at a trailing edge of said symbol burst.

5. An OFDM system as claimed in any previous claim, **characterised in that** said receiver includes performance measuring means for measuring received signal quality and reception window adjusting means for adjusting said time window duration.

6. An OFDM system as claimed in any previous claim, **characterised in that** said guard space duration can be adjusted to between 0.2µs and 50µs.

7. An OFDM system as claimed in any previous claim, **characterised in that** said receiver is adapted to detect a transmitted signal when said time window is incorrectly adjusted.

8. An OFDM system as claimed in any previous claim, **characterised in that** said system includes a plurality of mobile stations and a plurality of base stations, and is adapted to operate as a mobile telecommunications system.

9. A receiver, for use with an OFDM system including a transmitter adapted to transmit data in OFDM symbol bursts, in which, in the time domain, a portion of a symbol burst is repeated within said symbol burst as a guard space, said receiver having a time window with which, after demultiplexing, said symbol burst must be aligned, wherein said repeated portion of a symbol burst has a guard space duration (Tg) which is variable and which is adjusted, during operation, **characterised in that** said receiver is adapted to continuously transmit a control signal, indicative of a level of delay spread in a received signal, to said transmitter and said transmitter is adapted to adjust said guard space duration (Tg) in dependence of said control signal to overcome data loss caused by delay spread.

10. A receiver as claimed in claim 9, **characterised in that** said receiver includes performance measuring means for measuring received signal quality and reception window adjusting means for adjusting said time window duration in response to a signal from said performance measuring means.

11. A receiver as claimed in any of claims 9 to 10, **characterised in that** said guard space duration can be adjusted to between 0.2µs and 50µs.

12. A receiver as claimed in any of claims 9 to 11, **characterised in that** said receiver is adapted to detect a transmitted signal when said time window is incorrectly adjusted.

13. A receiver as claimed in any of claims 9 to 12, **characterised in that** said receiver is a mobile radio telephone transceiver adapted for use with a mobile telecommunications systems.

14. A method of operating an OFDM system comprising a receiver and a transmitter, by transmitting data as a series of OFDM symbol bursts, each symbol burst, in the time domain, having a portion thereof repeated therein as a guard space, said receiver having a time window with which, after demultiplexing, said symbol burst must be aligned, wherein said repeated portion of a symbol burst having a variable guard space duration (Tg), and, during system operation, adjusting said variable guard space duration (Tg), **characterised in that** said receiver continuously transmits a control signal, indicative of a level of delay spread in a received signal, to said transmitter and said transmitter adjusts said guard space duration (Tg) in dependence of said control signal to overcome data loss caused by delay spread.

15. A method as claimed in claim 14, **characterised by** copying the repeated portion of said symbol burst from a leading edge thereof.

16. A method as claimed in any of claims 14 to 15, **characterised by** repeating the repeated portion of said symbol burst at a trailing edge of said symbol burst.

17. A method as claimed in any of claims 14 to 16, **characterised by** said receiver measuring received signal quality and adjusting said time window duration so that said received signal quality exceeds a predetermined threshold:

18. A method as claimed in any of claims 14 to 17, **characterised in that** said guard space duration can be adjusted to between 0.2µs and 50µs.

19. A method as claimed in any of claims 14 to 18, **characterised by** said receiver detecting a transmitted signal when said time window is incorrectly adjusted.

## Patentansprüche

1. Ein OFDM-System mit einem Empfänger und einem Sender, wobei der Sender so ausgebildet ist, dass er Daten in OFDM-Bildsignalfolgen übertragen kann, in welchen in dem Zeitbereich ein Teil einer Bildsignalfolge innerhalb der Bildsignalfolge als ein Schutzraum wiederholt wird, wobei der Empfänger ein Zeitfenster hat, zu dem die Bildsignalfolge nach der Multiplexbehandlung ausgerichtet werden muss, wobei der wiederholte Teil der Bildsignalfolge eine Schutzdauer (Tg) hat, die variabel ist, und die während des Systembetriebs eingestellt wird, **dadurch gekennzeichnet, dass** der Empfänger so ausgebildet ist, dass er kontinuierlich ein Steuersignal, das den Pegel einer Verzögerungsspreizung in einem empfangenen Signal anzeigt ist, an den Sender übertragen kann und der Sender so ausgebildet ist, dass er die Schutzdauer (Tg) in Abhängigkeit von dem Steuersignal einstellen kann, um den Datenverlust, der durch die Verzögerungsspreizung verursacht wird, zu überwinden.

2. OFDM-System nach Anspruch 1, **dadurch gekennzeichnet, dass** der Empfänger so ausgebildet ist, dass er das Zeitfenster variieren kann, um bei der Demultiplexbehandlung eine Schutzdauer (Tg) zu erzeugen, die den Datenverlust, welcher durch die Verzögerungsspreizung versursacht wird, überwindet.

3. OFDM-System nach einem der Ansprüche 1 oder 2,
**dadurch gekennzeichnet, dass** der Teil der Bildsignalfolge, der wiederholt wird, von einer Vorderflanke der Bildsignalfolge kopiert wird.

4. OFDM-System nach einem der vorstehenden Ansprüche,
**dadurch gekennzeichnet, dass** der wiederholte Teil der Bildsignalfolge an der abfallenden Flanke der Bildsignalfolge wiederholt wird.

5. OFDM-System nach einem der vorstehenden Ansprüche,
**dadurch gekennzeichnet, dass** der Empfänger eine Leistungsmesseinrichtung zum Messen der Qualität des empfangenen Signals und eine Empfangsfenstereinstelleinrichtung zum Einstellen der Zeitfensterdauer hat.

6. OFDM-System nach einem der vorstehenden Ansprüche,
**dadurch gekennzeichnet, dass** die Schutzdauer zwischen 0,2 µs und 50 µs eingestellt werden kann.

7. OFDM-System nach einem der vorstehenden Ansprüche,
**dadurch gekennzeichnet, dass** der Empfänger so ausgebildet ist, dass er ein übertragenes Signal detektieren kann, wenn das Zeitfenster unkorrekt eingestellt ist.

8. OFDM-System nach einem der vorstehenden Ansprüche,
**dadurch gekennzeichnet, dass** das System eine Anzahl von Mobilstationen und eine Anzahl von Basisstationen aufweist und so ausgebildet ist, dass es als ein mobiles Telekommunikationssystem arbeiten kann.

9. Empfänger zur Verwendung bei einem OFDM-System, das einen Sender aufweist, der so ausgebildet ist, dass er Daten in OFDM-Bildsignalfolgen übertragen kann, wobei in dem Zeitbereich ein Teil einer Bildsignalfolge innerhalb der Bildsignalfolge als ein Schutzraum wiederholt wird, wobei der Empfänger ein Zeitfenster hat, zu welchem nach der Demultiplexbehandlung die Bildsignalfolge ausgerichtet werden muss, wobei der wiederholte Teil der Bildsignalfolge eine Schutzdauer (Tg) hat, die variabel ist, und die während des Betriebes eingestellt wird, **dadurch gekennzeichnet, dass** der Empfänger so ausgebildet ist, dass er kontinuierlich ein Steuersignal, das den Pegel der Verzögerungsspreizung in einem empfangenen Signal anzeigt, an den Sender übertragen kann und der Sender so ausgebildet ist, dass die Schutzdauer (Tg) in Abhängigkeit von dem Steuersignal eingestellt werden kann, um den durch die Verzögerungsspreizung verursachten Datenverlust zu überwinden.

10. Empfänger nach Anspruch 9, **dadurch gekennzeichnet, dass** der Empfänger eine Leistungsmesseinrichtung zum Messen der Qualität des empfangenen Signals und eine Empfangsfenstereinstelleinrichtung zum Einstellen der Zeitfensterdauer in Antwort auf ein Signal von der Leistungsmesseinrichtung aufweist.

11. Empfänger nach einem der Ansprüche 9 bis 10,
**dadurch gekennzeichnet, dass** die Schutzdauer zwischen 0,2 µs und 50 µs eingestellt werden kann.

12. Empfänger nach einem der Ansprüche 9 bis 11,
**dadurch gekennzeichnet, dass** der Empfänger so ausgebildet ist, dass er ein übertragenes Signal detektieren kann, wenn das Zeitfenster nicht korrekt eingestellt ist.

13. Empfänger nach einem der Ansprüche 9 bis 12,
**dadurch gekennzeichnet, dass** der Empfänger ein Mobilfunktelefon-Senderempfänger ist, der zur Verwendung in einem mobilen Telekommunikationssystem geeignet ist.

14. Verfahren zum Betreiben eines OFDM-Systems mit einem Empfänger und einem Sender durch Übertragen von Daten als eine Reihe von OFDM-Bildsignalfolgen, wobei jede Bildsignalfolge in dem Zeitbereich einen Teil hat, der in diesem als ein Schutzraum wiederholt wird, der Empfänger ein Zeitfenster hat, mit dem nach der Demultiplexbehandlung die Bildsignalfolge ausgerichtet werden muss, wobei der wiederholte Teil der Bildsignalfolge eine variable Schutzdauer (Tg) hat, und während des Systembetriebes die variable Schutzdauer (Tg) einstellt,
**dadurch gekennzeichnet, dass** der Empfänger kontinuierlich ein Steuersignal, das für den Pegel einer Verzögerungsspreizung in dem empfangenen Signal anzeigt, an den Sender überträgt und der Sender die Schutzdauer (Tg) in Abhängigkeit von diesem Steuersignal einstellt, um den durch die Verzögerungsspreizung verursachten Datenverlust zu überwinden.

15. Verfahren nach Anspruch 14, **gekennzeichnet durch** Kopieren des wiederholten Teils der Bildsignalfolge von deren Vorderflanke.

16. Verfahren nach einem der Ansprüche 14 bis 15, **gekennzeichnet durch** Wiederholen des wiederholten Teils der Bildsignalfolge an der abfallenden Flanke der Bildsignalfolge.

17. Verfahren nach einem der Ansprüche 14 bis 16,
**dadurch gekennzeichnet, dass** der Empfänger die Qualität des empfangenen Signals misst und die Zeitfensterdauer einstellt, sodass die Qualität des empfangenen Signals einen vorbestimmten Schwellwert übersteigt.

18. Verfahren nach einem der Ansprüche 14 bis 17,
**dadurch gekennzeichnet, dass** die Schutzdauer zwischen 0,2 µs und 50 µs eingestellt werden kann.

19. Verfahren nach einem der Ansprüche 14 bis 18,
**dadurch gekennzeichnet, dass** der Empfänger ein übertragenes Signal detektiert, wenn das Zeitfenster unkorrekt eingestellt ist.

## Revendications

1. Système de multiplexage à division de fréquence orthogonale (OFDM) comprenant un récepteur et un émetteur, le dit émetteur étant prévu pour transmettre des données en rafales de symboles OFDM dans lesquelles, dans le domaine du temps, une portion d'une rafale de symboles est répétée à l'intérieur de la dite rafale de symboles comme intervalle de garde, le dit récepteur ayant une fenêtre de temps avec laquelle, après démultiplexage, la dite rafale de symboles doit être alignée, dans lequel la dite portion répétée d'une rafale de symboles a une durée d'intervalle de garde (Tg) qui est variable et qui est ajustée, pendant le fonctionnement du système, **caractérisé en ce que** le dit récepteur est prévu pour transmettre continuellement un signal de commande, indicatif d'un niveau d'étalement de retard dans un signal reçu, au dit émetteur et le dit émetteur est prévu pour ajuster la dite durée d'intervalle de garde (Tg) en fonction du dit signal de commande afin d'éviter la perte de données due à l'étalement du retard.

2. Système OFDM selon la revendication 1, **caractérisé en ce que** le dit récepteur est prévu pour modifier la dite fenêtre de temps de manière à produire, lors du démultiplexage, une durée d'intervalle de garde (Tg) évitant la perte de données due à l'étalement du retard.

3. Système OFDM selon la revendication 1 ou la revendication 2, **caractérisé en ce que** la portion de la dite rafale de symboles qui est répétée est copiée à partir d'un bord de tête de la dite rafale de symboles.

4. Système OFDM selon une quelconque des revendications précédentes, **caractérisé en ce que** la dite portion répétée de la dite rafale de symboles est répétée à un bord de queue de la dite rafale de symboles.

5. Système OFDM selon une quelconque des revendications précédentes, **caractérisé en ce que** le dit récepteur comprend des moyens de mesure de performance pour mesurer la qualité du signal reçu, et des moyens de réglage de fenêtre de réception pour ajuster la durée de la dite fenêtre de temps.

6. Système OFDM selon une quelconque des revendications précédentes, **caractérisé en ce que** la dite durée d'intervalle de garde peut être réglée entre 0,2 µs et 50 µs.

7. Système OFDM selon une quelconque des revendications précédentes, **caractérisé en ce que** le dit récepteur est prévu pour détecter un signal transmis lorsque la dite fenêtre de temps est incorrectement réglée.

8. Système OFDM selon une quelconque des revendications précédentes, **caractérisé en ce que** le dit système comprend une pluralité de stations mobiles et une pluralité de stations de base, et il est prévu pour fonctionner comme un système de télécommunication mobile.

9. Récepteur, utilisable avec un système OFDM comprenant un émetteur prévu pour transmettre des données en rafales de symboles OFDM, dans lequel, dans le domaine du temps, une portion d'une rafale de symboles est répétée à l'intérieur de la dite rafale de symboles comme un intervalle de garde, le dit récepteur ayant une fenêtre de temps avec laquelle, après démultiplexage, la dite rafale de symboles doit être alignée, dans lequel la dite portion répétée d'une rafale de symboles a une durée d'intervalle de garde (Tg) qui est variable et qui est ajustée, pendant le fonctionnement, **caractérisé en ce que** le dit récepteur est prévu pour transmettre continuellement un signal de commande, indicatif d'un niveau d'étalement de retard dans un signal reçu, au dit émetteur et le dit émetteur est prévu pour ajuster la dite durée d'intervalle de garde (Tg) en fonction du dit signal de commande afin d'éviter une perte de données due à l'étalement du retard.

10. Récepteur selon la revendication 9, **caractérisé en ce que** le dit récepteur comprend des moyens de mesure de performance pour mesurer la qualité du signal reçu, et des moyens de réglage de fenêtre de réception pour régler la durée de la dite fenêtre de temps en réponse à un signal fourni par les dits moyens de mesure de performance.

11. Récepteur selon une quelconque des revendications 9 et 10, **caractérisé en ce que** la dite durée d'intervalle de garde peut être réglée entre 0,2 µs et 50 µs.

12. Récepteur selon une quelconque des revendications 9 à 11, **caractérisé en ce que** le dit récepteur est prévu pour détecter un signal transmis lorsque la dite fenêtre de temps est incorrectement réglée.

13. Récepteur selon une quelconque des revendications 9 à 12, **caractérisé en ce que** le dit récepteur est un émetteur - récepteur de radio-téléphone mobile prévu pour utilisation avec un système de télécommunication mobile.

14. Procédé d'exploitation d'un système OFDM comprenant un récepteur et un émetteur, par transmission de données en une série de rafales de symboles OFDM, chaque rafale de symboles, dans le domaine du temps, ayant une portion répétée dans cette rafale comme un intervalle de garde, le dit récepteur ayant une fenêtre de temps avec laquelle, après démultiplexage, la dite rafale de symboles doit être alignée, dans lequel la dite portion répétée d'une rafale de symboles a une durée d'intervalle de garde variable (Tg), et, pendant le fonctionnement du système, la dite durée d'intervalle de garde variable (Tg) est ajustée, **caractérisé en ce que** le dit récepteur transmet continuellement un signal de commande, indicatif d'un niveau d'étalement de retard dans un signal reçu, au dit émetteur et le dit émetteur règle la dite durée d'intervalle de garde (Tg) en fonction du dit signal de commande afin d'éviter une perte de données provoquée par l'étalement du retard.

15. Procédé selon la revendication 14, **caractérisé par** la copie de la portion répétée de la dite rafale de symboles à partir d'un bord de tête de cette dernière.

16. Procédé selon une quelconque des revendications 14 et 15, **caractérisé par** la répétition de la dite portion répétée de la dite rafale de symboles à un bord de queue de la dite rafale de symboles.

17. Procédé selon une quelconque des revendications 14 à 16, **caractérisé en ce que** le dit récepteur mesure la qualité du signal reçu et règle la durée de la dite fenêtre de temps de sorte que la qualité du signal reçu dépasse un seuil prédéterminé.

18. Procédé selon une quelconque des revendications 14 à 17, **caractérisé en ce que** la dite durée d'intervalle de garde peut être réglée entre 0,2 µs et 50 µs.

19. Procédé selon une quelconque des revendications 14 à 18, **caractérisé en ce que** le dit récepteur détecte un signal transmis lorsque la dite fenêtre de temps est incorrectement réglée.
